(19) Europäisches Patentamt
European Patent Office
Office européen des brevets

(11) **EP 3 387 822 B1**

(12) **EUROPEAN PATENT SPECIFICATION**

(45) Date of publication and mention
of the grant of the patent:
**22.07.2020 Bulletin 2020/30**

(21) Application number: **15813310.8**

(22) Date of filing: **10.12.2015**

(51) Int Cl.:
***H04L 29/12*** *(2006.01)*

(86) International application number:
**PCT/EP2015/079318**

(87) International publication number:
**WO 2017/097366 (15.06.2017 Gazette 2017/24)**

(54) **COLLECTING ADDRESSES IN A SUBNETWORK**

SAMMELN VON ADRESSEN IN EINEM UNTERNETZWERK

COLLECTE D'ADRESSES DANS UN SOUS-RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.10.2018 Bulletin 2018/42**

(73) Proprietor: **Telefonaktiebolaget LM Ericsson
(PUBL)
164 83 Stockholm (SE)**

(72) Inventors:
• **GAVRILOVIC, Sasa
10000 Zagreb (HR)**
• **MATAUSIC, Ivica
10430 Samobor (HR)**

(74) Representative: **Zacco Sweden AB
Valhallavägen 117
Box 5581
114 85 Stockholm (SE)**

(56) References cited:
**US-A1- 2008 008 148     US-A1- 2013 031 253
US-A1- 2015 271 086**

• **Dan Ardelean Douglas Comer: "Extensions to
ARP for cache revalidation", , 22 October 2004
(2004-10-22), pages 1-6, XP002760366, Retrieved
from the Internet:
URL:http://www.ardeleans.net/extensions-to
-arp-cache-revalidation.pdf [retrieved on
2016-07-29]**

## Description

Technical Field

The present invention relates to a method for collecting addresses in a packet subnetwork by a collecting node and to the corresponding collecting node.

The invention furthermore relates to a method for responding to a collect request of the collecting node carried out by a responding node and to the responding node itself. Furthermore, a system and a computer readable storage medium is provided.

Background

In a high availability environment where one of the key features is good In-Service Performance (ISP), such as in telecom networks, it is often required to reduce down time for any network element to a minimum. For example, if there are two (or more) redundant routers in a network, both routers should contain a copy of routing tables to be able to instantaneously take over in case of a failure in the redundant router. Another known method is populating the ARP (Address Resolution Protocol, RFC 826) cache in the redundant router (or host) with MAC (Media Access Control) addresses of the connected hosts, so that the router (host) may immediately send packets to all connected IP hosts without traffic loss due to ARP resolution (so called "Pre-ARP").

"Pre-ARP" requires populating ARP cache in a device during startup, before the device opens its ports for handling "real" incoming IP traffic. An IP connected device would typically have one or several IP addresses, belonging to one or several different subnets. Populating ARP cache means that the device must send ARP requests for all possible IP addresses that may or may not be connected on the same subnetwork. In real networks such action represents considerable load on the network and connected devices. Therefore the size of "Pre-ARP"-ed networks is usually limited, e.g. to /24 subnets (256 IP addresses).

Although the known "Pre-ARP" solutions provide the required ARP resolution prior to opening a device's ports for traffic, there are several drawbacks:
ARP resolution has to be done for all IP addresses in the subnetwork if there is no predefined pattern for assigning IP addresses in that particular subnetwork.

Furthermore, the standard ARP request-reply pattern applies for each resolved IP address. This means that a request message has to be sent to each IP address of the subnetwork. As a consequence network resources are consumed due to massive ARP broadcasting. When estimating the size of "Pre-ARP" networks, one has to be careful as if too many ARP resolutions are requested simultaneously, network congestion may occur making the procedure ineffective or even causing user traffic to be dropped.

US20080008148A1 discloses a radio bridging device is used for a communications network. If a source host transmits a communications request directed to a destination host, the radio bridging device records an IP address and a MAC address of the source host and an IP address of the destination host in a local table.

Document titled "Extensions to ARP for cache revalidation" discloses a mechanism for for reducing traffic bursts by distributing Address Resolution Protocol (ARP) requests over a longer period of time such that each request is sent at a unique time interval depending on number of hosts in a network.

Summary

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention.

Accordingly, a need exists to overcome the above-mentioned problems and to provide a possibility to more effectively identify network addresses of the other nodes in a subnetwork.

This need is met by the features of the independent claims. Further aspects are described in the dependent claims.

It is to be understood that the features mentioned above and features yet to be explained below can be used not only in the respective combinations indicated, but also in other combinations or in isolation without departing from the scope of the present invention. Features of the above-mentioned aspects and embodiments may be combined with each other in other embodiments unless explicitly mentioned otherwise.

Brief Description of the Drawings

The foregoing and additional features and effects of the application will become apparent from the following detailed description when read in conjunction with the accompanying drawings in which like reference numerals refer to like elements.

Fig. 1 shows an example of a network including a subnetwork in which a collecting node collects addresses of other network nodes in the subnetwork using features of the invention.

Figs. 2a and 2b show an example flowchart comprising steps carried out by the collecting node sending a collect request message to other network nodes of the subnetwork requesting all the other network nodes to inform the collecting node of their corresponding address.

Fig. 3 shows an example flowchart of a method carried out at a responding node receiving the collect request message from the collecting node and calculating a response time.

Fig. 4 shows an example situation how a responding node distributes the response message transmitted in response to the received collect request message in time according to a first embodiment.

Figs. 5a and 5b show an example flowchart of a method according to another embodiment carried out at a responding node receiving the collect request message and calculating a response time.

Fig. 6 shows an example graph explaining how a responding node measures a number of response messages during a learning time period.

Fig. 7 shows an example graph indicating a distribution of response messages based on the measured number of response message during the learning time period.

Fig. 8 shows an example graph indicating a final distribution of response messages according to the embodiment of Figs. 5 to 7.

Fig. 9 shows an example of a flowchart of a method carried out at a collecting node collecting addresses of other network nodes.

Fig. 10 shows an example of a flowchart of a method carried out at a responding node responding to a collect request message transmitted by the collecting node.

Fig. 11 shows an example of a flowchart of a method carried out a responding node according to a further embodiment responding to a collect request message transmitted by the collecting node.

Fig. 12 shows an example schematic representation of a collecting node collecting network addresses of the other network nodes of the subnetwork.

Fig. 13 shows an example schematic representation of a responding node responding to a collect request message sent by a collecting node of Fig. 12.

Fig. 14 shows another example schematic representation of a collecting node collecting network addresses of the other network nodes of the subnetwork.

Fig. 15 shows another example schematic representation of a responding node responding to a collect request message sent by a collecting node.

Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.
The drawings are to be regarded as being schematic representations, and elements illustrated in the drawings are not necessarily shown to scale. Rather, the various elements are represented such that theirfunction and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

Hereinafter techniques are described how a collecting node can collect addresses from the different nodes of a subnetwork, wherein the nodes responding to the request transmitted by the collecting node are called responding nodes hereinafter. In one embodiment an enhancement in an address resolution protocol (RFC 826) is proposed that makes the "Pre-ARP" procedure effective on subnetworks, especially on large subnetworks. The enhancement comprises inter alia a new ARP message for resolution of all IP addresses within the subnetwork, also called collect request message hereinafter. Furthermore, a basic mechanism for a host/responding node responding to the collect request message is discussed. Additionally an advanced mechanism for a responding node responding to the collect request message is explained in more detail. Furthermore, an implementation of the mechanism for the internet protocol version 4 (IPv4) and version 6 (IPv6) is shown.

When a network device requires a "Pre-ARP" resolution of all IP addresses within the subnetwork, it will send the new collect request message. The message can be sent to the link layer broadcast address, as it is the case for a regular ARP request message. Any host or responding node that finds its IP address belonging to the requested subnetwork shall respond with a response message e.g. an ARP reply message. In this manner, the ARP cache of the requesting host is populated with addresses, here MAC addresses of all IP hosts belonging to the requested network and residing on the same network segment (LAN).

In the following examples of the invention will be discussed in connection with an IP network. However it should be understood, that the network could be any packet network such as a for example a network using cell transmission, where cells are regarded as packets of fixed length. The collected address can be a network address, such as for example an IP address, a physical address, such as for example a Media Access Control address, MAC address, or any other address of a host. Furthermore, it is possible that a combination of those addresses, for example a combination of the network address and the physical address, is collected. In this embodiment, the collecting node may receive the network address and the underlying layer address from the responding node.

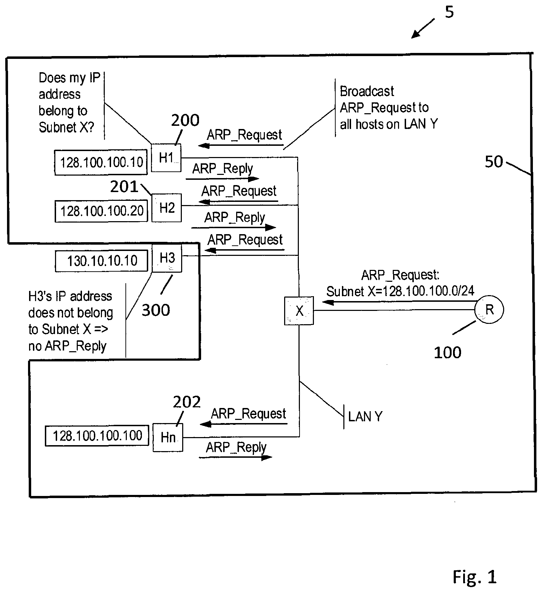

Fig. 1 shows an example of a network 5 with comprising a node 100, several nodes 200-202 and node 300. Network 5 comprises a subnetwork 50 which comprises of nodes 100 and 200-202. In the example shown, the node 100 takes the role of a collecting node which, e.g. after a restart, needs to know the addresses of the other nodes present in the subnetwork 50. Node 100 sends a collect request message to all other nodes of the network, using a broadcast or multicast mechanism. As will be explained in further detail below, the other nodes of the network, inter alia the nodes 200, 201, 202, 300 will check whether they are located in the subnetwork to which the collect request message relates. In the affirmative, they will transmit a response message back to the collecting node, indicated as ARP reply message in Fig. 1. In the example of Fig. 1 nodes 200, 201 and 202 belong to the same subnetwork 50 as can be deduced from the corresponding IP addresses. Thus, these nodes will respond. However, node 300 does not belong to the same subnetwork 50, even though it belongs to network 5, and thus does not respond to the collect request message. In the embodiment shown in Fig. 1 only a few nodes are shown. It should be understood that the network 5, to which all nodes shown in Fig. 1 belong, can be much larger. The mechanism of the invention is especially beneficial for networks and subnetworks comprising a large number of nodes. Furthermore, in the example shown the subnetwork 50 does not contain all the nodes of the network, as node 300 is not part of the subnetwork 50. In another embodiment, all nodes of the network 5 may also be part of the subnetwork 50 so that the subnetwork and the network contain the same number of nodes.

The method described above and described in further detail below may be effective both at start-up of a node and at a refresh of the network addresses of other nodes such as a refresh of the ARP table. Such a refresh may be a regular refresh. However, the method is not restricted to the ARP as will be discussed further below.

When one network node, here collecting node 100, requires a "Pre-ARP" resolution of all IP addresses within the subnetwork 50, it will send the collect request message. The message may be sent to the link layer broadcast address and any host that finds its IP address belonging to the requested subnetwork will reply with a response message. In the following, a basic and advanced mechanism for responding to the request will be described. The collecting node can transmit together with the collect request message one or several parameters, which can be used by the responding node (200, 2012, 202) to first of all determine whether the responding node should react to the received collect request message. Furthermore, the responding node can determine a response time $T_{reply}$ using inter alia the received parameters or parameters stored within the responding node. The responding node will use a mechanism, which distributes the response over a certain time period so that not all responding nodes respond at the same time. In the example shown below the collecting node 100 transmits all the parameters needed by the responding node together with the collect request message. However, it should be understood that some of the parameters may also be preconfigured in the responding node or may be transmitted to the different responding nodes by a different mechanism or message.

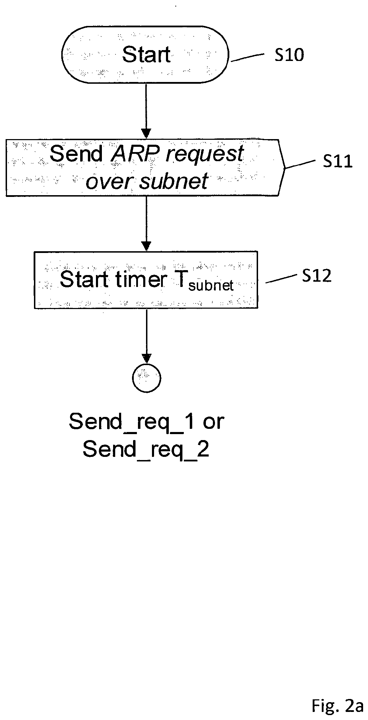

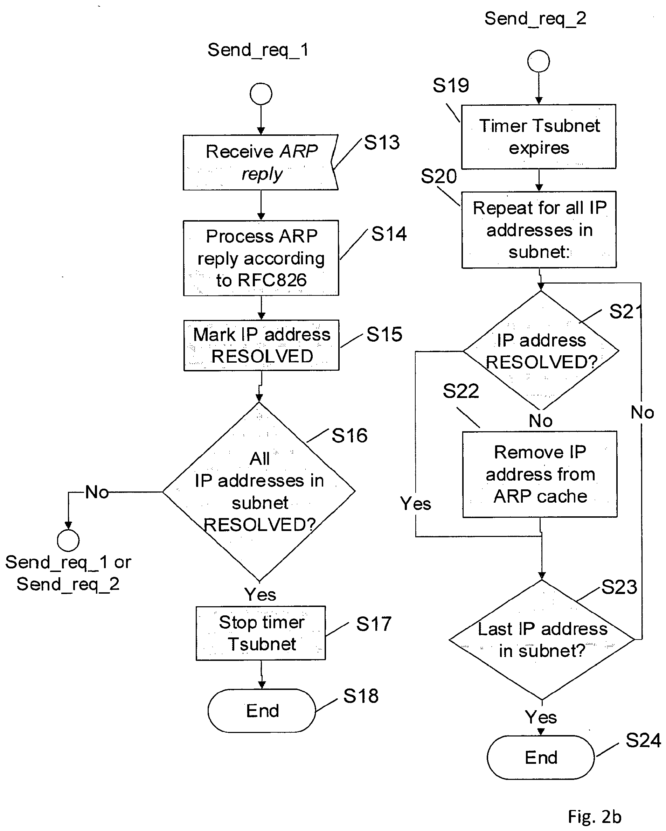

Referring to Figs. 2a and 2b, a method is disclosed how the collecting node behaves in order to collect addresses such as IP or MAC addresses from other network nodes of a subnetwork. Referring to Fig. 2a, the method starts in step S10. In step S11 the collect request message is transmitted to all nodes of the network 5. The collect request message of step S11 comprises a first parameter allowing the packet subnetwork and optionally all possible addresses of the subnetwork (corresponding to the maximum number of nodes in the subnetwork) to be determined. In the example of Fig. 1 the parameter 128.100.100.0/24 helps to determine the subnetwork as the first three octets describe the network prefix or network mask. In the embodiment shown, the prefix length is 24 bits so that 8 bits remain for the different nodes of the subnetwork, thus 256 IP addresses. The collect request message can furthermore comprise a second parameter, which allows the responding node to determine a response rate, which indicates an expected amount of response messages received from other network nodes in a defined time. The collect request message may furthermore comprise a third parameter, which indicates the number of nodes (hosts) in the subnetwork, and a fourth parameter which indicated a learning time ($T_{learn}$, which is discussed later in connection with the advanced mechanism of the responding node).

The second parameter may be a response rate or maybe a response time. When the second parameter is a response time, a response rate can be determined based on the number of nodes in the subnetwork (either the maximum possible number of nodes or a given number of nodes indicated in the third parameter) and the response time.

When the second parameter is a response rate, a response time can be determined based on the response rate and the maximum number of nodes in the subnetwork derived from the first parameter.

An example for IP version 4 is given below with first parameter being called PREFIX (consisting of 32 bits), the second parameter comprising the parameter RESPTIME or RATE and optionally the third parameter called MAXHOSTS. The fourth parameter is not used in the example.

- first parameter: PREFIX (8 bits) - network prefix length

- second parameter, one of:

    - R - response rate for ARP replies (messages per second)
    - RESPTIME (32 bits) - response time for sending ARP replies for the whole subnetwork in milliseconds

- third parameter (optionally)

    - MAXHOSTS (32 bits) - predefined maximum number of connected hosts in the subnet

The parameters are explained in the following examples.

*Example 1*

$$PREFIX = 24 \quad \text{(first parameter)}$$
$$RESPTIME = 200 \quad \text{(second parameter)}$$

The number of hosts in the subnet ($N_{sub}$) derived from PREFIX: $N_{sub} = 256$

The rate (R) at which ARP replies may be sent to the requesting device is

$$R = N_{sub}/RESPTIME = 256 \text{ ARP replies}/ 200 \text{ ms}$$

In this example, the network prefix equals 24 bits. This leaves 8 bits to address the host, leading to a subnet size of 256 IP addresses. Thus $N_{sub} = 256$ can be determined from the PREFIX. The subnet size matches the maximum number of possible ARP replies. The entire ARP collect request message procedure must finish within RESPTIME. The first parameter PREFIX allows all network addresses of the subnetwork ($N_{sub}$) to be determined. The second parameter, here RESPTIME, is used together with $N_{sub}$ to determine the response rate (R), i.e. the amount of the response messages the collecting node is expecting within a given time frame, which may be equal to the number of response messages the collecting node is able to process.

*Example 2*

PREFIX = 16       (first parameter)
R = 512           (second parameter)

In this example, the network prefix equals 16, i.e. subnet size is 65536 IP addresses as 16 bits are available to address the host ($N_{sub}$ = 65536). The rate at which ARP replies may be sent to the requesting device is
R = 512 messages/s

The responding nodes sending a response message should take care that no more than 512 response messages/ARP replies are sent to the network over a period of 1 second from all those nodes that are affected by the collect request message.

RESPTIME can be then calculated by dividing $N_{sub}$ with R.

*Example 3*

PREFIX = 16         (first parameter)
RESPTIME = 200      (second parameter)
MAXHOSTS = 1000     (third parameter)

In this example, the network prefix equals 16 bits. This leaves 16 bits to address the host, leading to a theoretical subnet size of 65536 IP addresses. However the collecting node indicates in the third parameter (MAXHOSTS) that 1000 nodes are assumed to be present in the subnet, thus $N_{sub}$ is set to MAXHOSTS ($N_{sub}$ = 1000). In the second parameter the collecting node indicates that ARP replies for the 1000 nodes are expected to be received within RESPTIME = 200 ms.

The rate R at which ARP replies may be sent to the requesting device is

$$R = N_{sub}/RESPTIME \qquad (1)$$

$$= 1000 \text{ ARP replies}/ 200 \text{ ms} = 5 \text{ ARP replies / ms}$$

In the third example given above, the responding nodes sending response messages should take care that no more than 5 response messages/ARP replies are sent to the network over a period of 1 ms from all nodes that are affected by the collect request message.

In all the examples above the total execution time for the procedure with request and response messages is proportional to the number of network nodes/IP hosts on the queried subnetwork.

Ideally, the ARP replies should be uniformly distributed over a period of RESPTIME.

It is possible that the collecting node may request an immediate response from all hosts on the subnetwork by indicating this by a predefined parameter, e.g. by setting RESPTIME or R to 0, i.e. in that case no response rate is defined.

Referring to Fig. 2a, the collecting node furthermore starts a timer for $T_{subnet}$ in order to set a timeout in step S12. The timeout indicates until when response messages are expected by the collecting node. The timer may be bigger than the RESPTIME in the examples above to ensure that all responding nodes have responded before the timeout expires.

Fig. 2b shows two different options after step S12. In a first option, a response message is received in step S13 from one of the responding nodes and the response message is processed in step S14, in the example given according to RFC 826. In step S15, the collecting node marks the IP address as resolved. In step S16, the collecting node checks whether all IP addresses of the subnetwork are resolved ("all IP addresses of the subnet" could be either the maximum possible number of IP addresses on the subnet in line with the first and second examples above, or the number of maximum expected replies indicated in the third parameter, MAXHOSTS, of the third example above). If this is not the case, the system can return either to the first or second option after step S12. If all IP addresses in the subnetwork are resolved, the timer is stopped in step S17 and the method ends in step S18.

However, it is also possible that the timer for $T_{sobret}$ expires in step S19. The following step S20 is repeated for all IP addresses of the subnetwork:
It is checked in step S21 whether the IP address is resolved. If this is not the case, the IP address is removed from a memory of the collecting node in step S22, where all addresses are stored, by way of example, in the ARP cache. Returning back to step S21 if the IP address is resolved it is checked in step S23 whether the last IP address of the subnetwork is processed ("last IP addresses of the subnet" could be either the last possible number of IP addresses on the subnet in line with the first and second example above, or the number of maximum expected resolved IP addresses indicated in the third parameter, MAXHOSTS, of the third example above). If this is not the case, the system returns to step S21 and if the last IP address in the subnetwork is checked the system ends in step S24.

From the above discussion, it can be deduced that the collecting node may set a timeout until when the response messages from the other network nodes have to be received. When the timeout occurs, i.e. if the timer for $T_{subnet}$ expires, the collecting node considers possible network nodes of the other network nodes, from which no response messages are received before the timeout, as non-existing in the packet subnetwork.

Furthermore, if an address is present in the memory or ARP cache for one of the other network nodes, and if no response messages is received from said one network node, its corresponding address is removed from the memory.

The timeout can be set equal to a maximum round-trip time (RTT) for an ARP request. It is usually set in the collecting node to monitor the response from the network. If the timer expires, the collecting node considers the IP address as non-existing in the network, it is considered as expired and the sending host may remove it from the memory, e.g. cache.

The timeout may be set arbitrarily in the sending host. The total timeout for all IP addresses of the subnetwork should be carefully selected. In the example given above the total timeout should not be less than the response time and the total timeout should not result in a re-try of the collect request message in order to avoid continuous ARP broadcast.

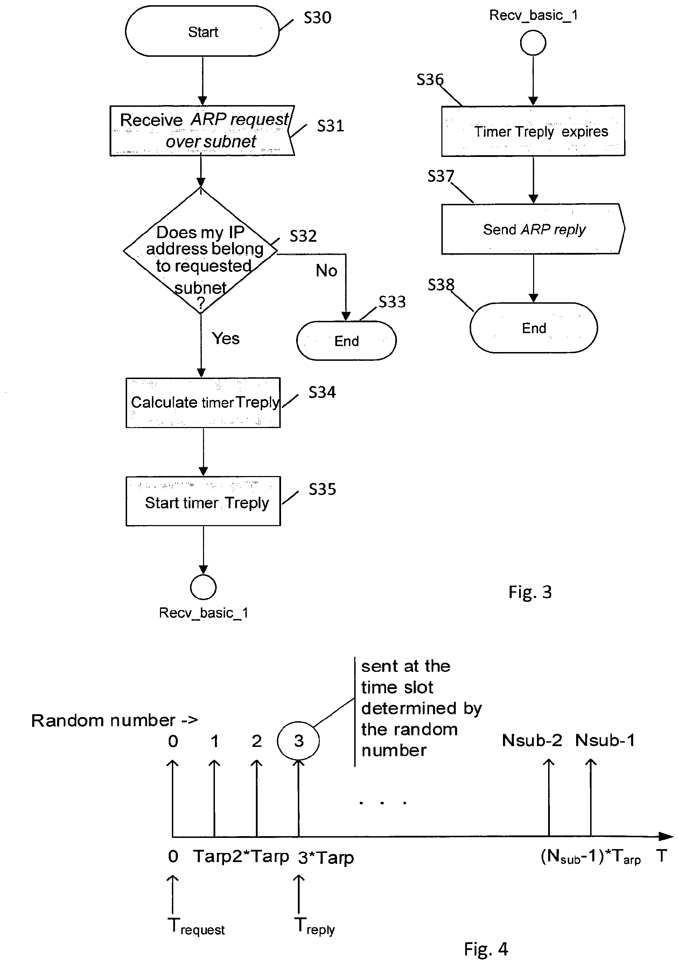

A basic mechanism for a responding node how to respond to the received collect request message is discussed in connection with Figs. 3 and 4 below.

In Fig. 3 the method starts with step S30. In step S31, a responding node receives the collect request message transmitted by the collecting node in step S11 of Fig. 2. In step S32 the node receiving the collect request message checks, e.g. with the use of the first parameter, whether the own IP address belongs to the requested subnetwork. If this is not the case, the method ends in step S33. However, if the IP address belongs to the requested subnetwork it calculates a response time $T_{reply}$ in step S34 and a timer for $T_{reply}$ is started in step S35 using the calculated $T_{reply}$. The method then continues and if the timer expires in step S36 the response message is transmitted in step S37. The method ends in step S38.

Not all nodes belonging to the subnetwork should respond simultaneously as this would lead to a network congestion. The basic mechanism shown in Figs. 3 and 4 calculates the response time $T_{reply}$ based on at least two parameters.,

In the example given below the second parameter is the response time (RESPTIME). $N_{sub}$ (number of hosts in the subnet) is either determined from the first parameter (PREFIX) or from the third parameter (MAXHOSTS). Based on these input values the responding node calculates the time to send the response or reply message relative to the time when the collect request message has been received.

The response rate (R) at which the collecting node can process the response messages may be received in the collect request message or can be calculated as explained above
The timeslot that is available per ARP reply $T_{arp}$ can be calculated as:

$$T_{arp} = RESPTIME \ / \ N_{sub} \ = \frac{1}{R} \ (2)$$

In the next step a uniform or any other predefined distribution is used to get a random number between 0 and $N_{sub}-1$. The resulting random number is then used to obtain the real-time to send the response message. This is shown in further detail in Fig. 4 to determine a number between 0 and $N_{sub}-1$ in order to determine a timeslot when the response message should be sent. In the example shown, the randomly generated number is 3 so that the responding node will send the response message after 3 timeslots at time $T_{reply}$.

The response time to reply can be calculated as follows:

$$T_{reply} = T_{request} + unif\{0,(N_{sub} - 1)\} * T_{arp} \ (3)$$

where

$T_{request}$: time when ARP collect request message is received in responding node
$T_{reply}$: time to send an ARP reply relative to $T_{request}$
$unif\{0,(N_{sub}-1)\}$ - uniform distribution function
$T_{arp}$: time slot available per ARP reply

The uniform distribution function can be either continuous (producing real numbers) or discrete (producing integers). Discrete uniform distribution has the advantage that no more than one ARP reply will be produced during one $T_{arp}$ period. This is more suitable for IP networks where bursts of messages should in general be avoided. However, if some implementation used continuous uniform distribution instead, this would not represent a major drawback in the proposed mechanism.

When $T_{reply}$ expires, the responding host sends an *ARP reply* message. ARP reply is sent to sender's address received in the ARP collect request message. Supposing that function $unif\{0,(N_{sub}-1)\}$ gives a uniform distribution of integers, the replies will be uniformly distributed over time.

The total time for processing an ARP collect request message using the basic mechanism is:

$$T_{total} = (N_{sub} - 1) * T_{arp} \quad (4)$$

If $N_{sub}$ is determined from the first parameter and reflects the maximum number of addressable hosts in the subnet, then $T_{total}$ does not depend on the real number of hosts (IP addresses) in the network, but is based on the assumption that a node exists for each IP address of the subnetwork, i.e. for all possible addresses of the subnetwork.

If $N_{sub}$ is determined from the third parameter it may reflect a real or expected number of addressable hosts (a number which may be smaller than the maximum number of addressable hosts in the subnet). $T_{total}$ will be then smaller compared to the above case where $N_{sub}$ is determined from the first parameter, which offers the advantage of a faster completion of the ARP collection request cycle.

The following table summarizes different options to calculate the reply time $T_{reply}$. Here, in addition to the first and second parameter mentioned above, a third parameter (MAXHOSTS), the configured number of nodes in the subnet, may also be used instead of the number derived from the first parameter. This third parameter may be predefined in the responding nodes of the subnetwork or may be received by the responding nodes with the collect request message or any other message.

| Parameter | Value | Variable | Opt.1 | Opt.2 | Opt.3 | Opt.4 |
|---|---|---|---|---|---|---|
| 1st parameter[1] | Number of addresses in subnetwork | $N_{sub}$ (derived from PREFIX) | x | | x | |
| 2nd parameter | Response rate | R | x | x | | |
| | Response time | RESPTIME | | | x | x |
| 3rd parameter | Configured maximum number of hosts (<= 1st parameter) | MAXHOSTS | | x | | x |
| [1] 1st parameter $N_{sub}$ may be derived from PREFIX, which also defines the subnetwork. | | | | | | |

Option 1 and 2

$$Treply = Trequest + unif\{0, (Nsub - 1)\} * (\frac{1}{R})$$

with $N_{sub}$ = MAXHOSTS for option 2.

Option 3 and 4

$$Treply = Trequest + unif\{0, (Nsub - 1)\} * (\frac{RESPTIME}{Nsub})$$

with $N_{sub}$ = MAXHOSTS for option 4.

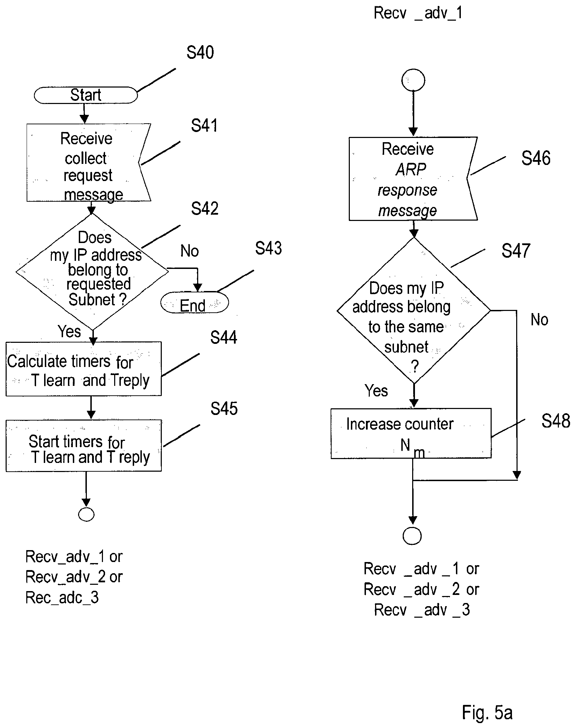

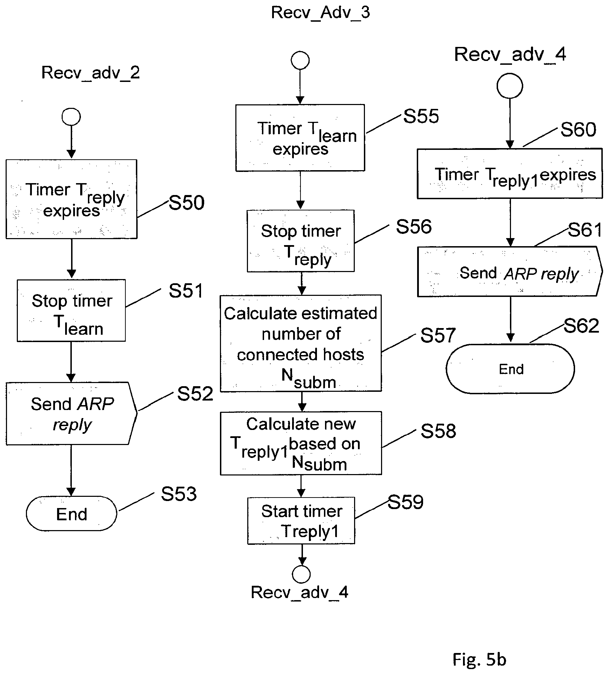

In connection with Figs. 5-8 an advanced mechanism for operating the responding node is described in more detail. This advanced mechanism for controlling the response time $T_{reply}$ takes as input parameters the first and second parameters, optionally also the third and fourth parameters. The advanced mechanism estimates a number of network nodes present in the packet subnetwork. The estimated number of network nodes can be determined by extrapolating the measured number of response messages in a learning time period $T_{learn}$ using a predefined distribution of response messages in time to a total time period needed to send the response messages from all packet addresses of the subnetwork. As a consequence, the advanced mechanism relies on a real number of hosts connected to the subnetwork. At least during the learning time period $T_{learn}$ the responding nodes should send their response messages to all nodes of the network so that the responding nodes can count the number of response messages. By way of example, they may be sent to the broadcast link layer address, i.e. MAC address FF:FF:FF:FF:FF:FF. The advanced mechanism uses the following parameters to determine a reply time:

$N_{sub}$ - number of IP addresses in the subnet (determined from PREFIX or from the third parameter)
RESPTIME - Time until when all hosts should have sent their response
R - Response rate (rate of ARP replies in a given time - messages per s)
$T_{total}$ - total time to send ARP replies for IP addresses in the subnetwork ($N_{sub}$)
$T_{learn}$ - learning period for measuring number of ARP replies broadcast in the network
$N_m$ - measured number of ARP replies in the learning time $T_{learn}$
$N_{subm}$ - estimated number of IP addresses in the network
$T_{totalm}$ - total time to send ARP replies for the measured number of IP addresses in the network (Nm)
$T_{arp}$ - time slot that is available per ARP reply
$T_{request}$ - time when ARP collect request message is received in the responding host
$T_{reply}$ - time to send an ARP reply relative to $T_{request}$

The advanced mechanism for responding to the collect request message can be divided into two main steps or phases. In a first phase, the total number of hosts or network nodes connected to the subnetwork is estimated. In a second phase, the response messages are distributed in time based on the capacity of the collecting node (the response rate R) and the estimated number of network nodes.

In the following, it will be discussed how the total number of connected hosts is estimated. In a first step, the hosts connected to the subnetwork behave as if all IP addresses in the subnet (parameter $N_{sub}$) have been configured. In the learning period, the response messages are uniformly distributed over time similar to the basic mechanism. The total time for sending response messages is calculated using the number of IP addresses in the subnetwork $N_{sub}$ as for the basic mechanism:

$$T_{total} = (N_{sub} - 1) * Tarp \quad (5)$$

Referring to Fig. 5a the method starts in step S40 and a responding node receives the collect request message in step S41. As in the basic mechanism the node checks first of all whether the own IP address belongs to the subnet based on the PREFIX parameter received with the collect request message (S42). If not the method ends in step S43. If the node receiving the collect request message belongs to the subnetwork for which the collect request message is received the learning time period $T_{learn}$ and the response time $T_{reply}$ are determined in step S44. As far as the learning time period is concerned, this parameter may be preconfigured in each of the responding nodes. In another alternative the learning time period $T_{learn}$ is received from the requesting node, either as a further parameter contained in the collect request message or in a separate message. In step S45 the timers for the determined $T_{learn}$ and $T_{reply}$ are started.

The different options how the method continues at the responding node are mentioned in the right part of Fig. 5a and in Fig. 5b.

In the advanced mechanism the response messages are sent to all of the other network nodes (for example broadcasted). During the learning period each of the responding nodes calculates a response time based on the assumption that all possible IP addresses ($N_{sub}$) are present in the network. The responding node can count a number of reply messages in the network over the predefined learning period $T_{learn}$. This period can be any period between 0 and $T_{total}$, $T_{total}$ corresponding to total time to send response messages for all IP addresses ($N_{sub}$) of the network. Furthermore, it should be noted that all responding nodes should use the same $T_{learn}$.

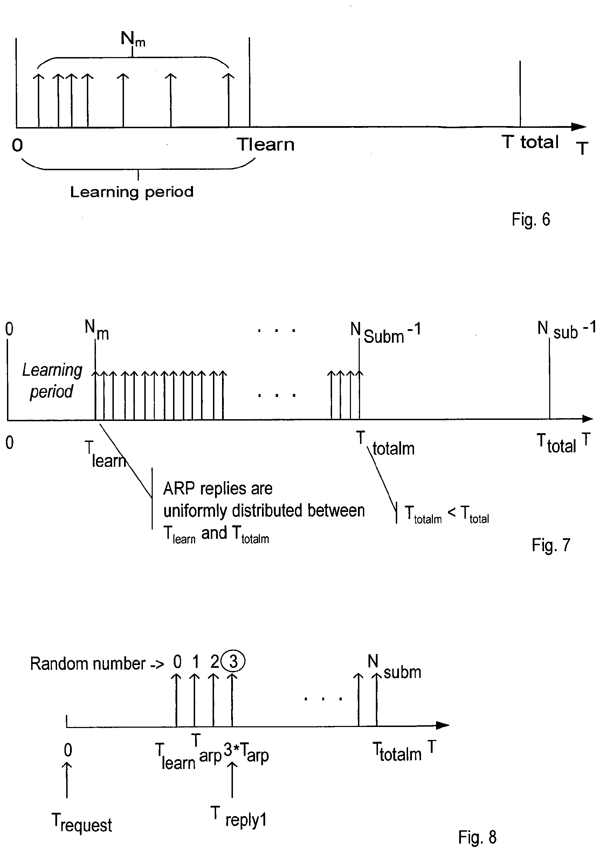

The actual number of response messages detected by each of the responding nodes during $T_{learn}$ may be less (for example if less hosts than $N_{sub}$ are present in the subnetwork). As shown in connection with Fig. 6 the measured number of response messages in the learning time period $T_{learn}$ is defined as $N_m$. Given a uniform distribution of response messages over the total response time $T_{total}$, it is possible to assume that each subsequent time period of $T_{learn}$ would contain the same number of response messages. As a consequence it is possible to calculate the total number of response messages that would be received within $T_{total}$. Thus, it is possible to estimate the total number of hosts in the network. In the example mentioned above a uniform distribution is used. However, it should be understood that any other distribution may be used as long as all responding nodes base their assumption on the same distribution. The estimated total number of nodes in the subnetwork can be calculated as follows if a uniform distribution is assumed:

$$N_{subm} = \left[ N_m * \frac{T_{total}}{T_{learn}} \right] \quad (6)$$

the result may be rounded to the nearest integer.

As can be deduced from the above, the accuracy of the estimated number of hosts $N_{subm}$ depends on the length of the learning period $T_{learn}$ compared to $T_{total}$ and on the real number of connected hosts. In general, the measured number is more accurate the longer the learning time period $T_{learn}$ is and the larger the number of connected hosts is. If the measured number of response messages $N_m=0$, it is recommended to set $N_{subm}$ to a default number, e.g. $N_{subm}= N_{sub}$ in order to avoid immediate burst of response messages after the learning period.

As shown in Fig. 7, the remaining number of response messages after the learning period is estimated to $N_{subm}-N_m$. These replies can be uniformly distributed in time between $T_{learn}$ and $T_{totalm}$.

A time slot that is available per ARP reply is calculated by the following equation 7:

$$T_{arp} = RESPTIME /\text{Nsub} = \frac{1}{R} \quad (7)$$

A uniform distribution randomly produces a number between zero and $N_{subm}$ - $N_m$- 1. The real time to send the reply message can then be calculated as:

$$T_{reply1} = T_{request} + T_{learn} + unif\{0,(N_{subm} - N_m - 1)\} * T_{arp} \quad (8)$$

If the responding node has not already sent the reply message in the learning period a new reply time $T_{reply1}$ is calculated and when this new reply time expires the responding host can send the response message as shown in Fig. 8. As mentioned above, during the learning period the response messages are sent to all nodes of the subnetwork. In order to reduce the network traffic, it is possible to send the reply messages after the learning time period only directly to the requesting node.

$$T_{totalm} = T_{learn} + (N_{subm} - N_m - 1) * T_{arp} \quad (9)$$

Depending on the estimated number of responding nodes, $T_{totalm}$ should be significantly lower than $T_{total}$, the total time needed for response from the maximum number of hosts in the subnetwork. This makes the advanced mechanism for response messages more efficient in large networks where an arbitrary number of IP addresses of the subnetwork is actually used.

Referring back to Fig. 5a the right part describes the method how the responding node counts the number of response messages during the learning time period. In step S46 the responding node receives a response message from another node in the subnetwork which was sent in a broadcast mode to all addresses. In step S47 it is checked whether the source IP address received in the response message belongs to the same subnetwork as the responding nodes own IP address. If this is not the case the method ends for this broadcast message and the responding node may wait for further response messages to be received. If, however, in step S47 the response message belongs to the same subnetwork the counter $N_m$ is increased in step S48. This method is repeated until the learning time period $T_{learn}$ expires.

The middle part of Fig. 5b shows what happens when the learning timer expires. The learning timer expires in step S55 and the reply timer $T_{reply}$ that was calculated at the beginning is stopped in step S56, wherein it is assumed that the responding node has not yet sent its response message. In step S57 the estimated number of connected hosts $N_{subm}$ is calculated and in step S58 a new reply time $T_{reply1}$ is calculated based on the estimated number of connected hosts. In step S59 the timer is started for the newly calculated reply time $T_{reply1}$.

On the left part of Fig. 5b it is shown what happens if $T_{reply}$ expires as shown in step S50. If the timer expires the learning timer $T_{learn}$ (if it is still running and has not expired yet) is stopped in step S51 and the response message is transmitted back to the collecting node in step S52. The method ends in step S53.

The right part of Fig. 5b shows the further details after the timer has started for $T_{reply1}$. If this timer expires in step S60, the response message is sent in step S61 at the determined response time $T_{reply1}$ and the method ends in step S62.

The advanced mechanism is capable of handling any protocol using a one-to-many communication scheme, e.g. a protocol which triggers simultaneous transactions from any hosts in the network. In this case the advanced mechanism provides a method for optimizing the sending of responses over a time.

The following table describes different options to calculate $T_{reply}$ for the advanced method described above. The third parameter, the configured number of nodes in the subnet, may also be used instead of the number derived from the first parameter. The third parameter may be predefined in the responding nodes of the subnetwork or may be received by the responding nodes with the collect request message or any other message. The learning time period $T_{learn}$ may be received in the collect request message or any other message, or may be preconfigured in each node of the subnetwork.

| Parameter | Value | Variable | Opt.1 | Opt.2 | Opt.3 | Opt.4 |
|---|---|---|---|---|---|---|
| 1st parameter[1] | Number of addresses in subnetwork | $N_{sub}$ (derived from PREFIX) | x | | x | |
| 2nd parameter | Response rate | R | x | x | | |
| | Response time | RESPTIME | | | x | x |
| 3rd parameter | Configured maximum number of hosts (<= 1st parameter) | MAXHOSTS | | x | | x |
| 4th parameter | Learning time | $T_{learn}$ | x | x | x | x |
| 1) 1st parameter $N_{sub}$ may be derived from PREFIX, which also defines the Subnetwork. | | | | | | |

Option 1 and 2

$$Ttotal = (Nsub - 1) * (1/R)$$

$$Nsubm = [Nm * Ttotal/Tlearn]$$

$$Treply = Trequest + Tlearn + unif\{0, (Nsubm - Nm - 1)\} * \left(\frac{1}{R}\right)$$

with $N_{sub}$ = MAXHOSTS for option 2.

Option 3 and 4

$$Ttotal = (Nsub - 1) * (RESPTIME/Nsub)$$

$$Nsubm = [Nm * Ttotal/Tlearn]$$

$$Treply = Trequest + Tlearn + unif\{0, (Nsubm - Nm - 1)\} * \left(\frac{RESPTIME}{Nsub}\right)$$

with $N_{sub}$ = MAXHOSTS for option 4.

In the following an implementation of the above described mechanism is shown for the address resolution protocol ARP. The proposed mechanism requires that a new ARP request message is added to ARP.

One idea is to extend the standard ARP request message with the parameters required to execute the above described mechanism. One possible solution for message structure is shown in the following table:

| Internet Protocol (IPv4) over Ethernet ARP packet | | |
|---|---|---|
| bit offset | 0 - 7 | 8 - 15 |
| | | |
| 0 | Hardware type (HTYPE) | |
| 16 | Protocol type (PTYPE) | |
| 32 | Hardware address length (HLEN) | Protocol address length (PLEN) |
| 48 | Operation (OPER) | |
| 64 | Sender hardware address (SHA) (first 16 bits) | |
| 80 | (next 16 bits) | |
| 96 | (last 16 bits) | |
| 112 | Sender protocol address (SPA) (first 16 bits) | |
| 128 | (last 16 bits) | |
| 144 | Target hardware address (THA) (first 16 bits) | |
| 160 | (next 16 bits) | |
| 176 | (last 16 bits) | |
| 192 | Target protocol address (TPA) (first 16 bits) | |
| 208 | (last 16 bits) | |
| 224 | Network prefix (PREFIX) | Spare (8 bits) |
| 240 | Rate of ARP replies (R) or maximum response time in milliseconds (RESPTIME) (first 16 bits) | |
| 256 | (last 16 bits) | |
| 272 | MAXHOSTS (first 16 bits) | |
| 288 | (last 16 bits) | |
| 304 | Tlearn (first 16 bits) | |
| 320 | (last 16 bits) | |

Bit offset field 240 and 256, which may be used to either to indicate the ARP reply rate or the maximum response time, may be also split into two separate fields for the ARP reply rate and the maximum response time.

Not all the new bit offset fields must be present. For example fields 272/288 for MAXHOSTS and 304/320 for Tlearn may be optional fields.

The order of the new fields in the above packet is just an example and may be changed.

A new type of ARP operation is needed for the new message: the new collect request message or ARP collect request message. Any available and not used operation code from the list of ARP operation codes (IANA document Address Resolution Protocol Parameters) may be used for this purpose, e.g. OPER = 26. Any host receiving this type of ARP operation from the local network will be able to recognize the new ARP message type. By way of example the parameter R=0 or RESPTIME = 0 means that an immediate response is required.

In the following, we will provide an example of the collect request message in the following table:

Sender IP address: 128.100.100.1

Sender MAC address: AA:BB:CC:DD:EE:FF

Target IP address: 128.100.100.0/24

Target MAC address: FF:FF:FF:FF:FF:FF (broadcast MAC address)

PREFIX = 24

R = 256 (ARP replies per second)

| Internet Protocol (IPv4) over Ethernet ARP packet | | |
|---|---|---|
| bit offset | 0 - 7 | 8 - 15 |
| 0 | HTYPE = 1 (Ethernet) | |
| 16 | PTYPE = 0x0800 | |
| 32 | HLEN = 6 (Ethernet) | PLEN = 4 (IP) |
| 48 | OPER = 26 | |
| 64 | SHA (first 16 bits) = 0xAABB | |
| 80 | (next 16 bits) = 0xCCDD | |
| 96 | (last 16 bits) = 0xEEFF | |
| 112 | SPA (first 16 bits) = 0x8064 | |
| 128 | (last 16 bits) = 0x6401 | |
| 144 | THA (first 16 bits) = 0xFFFF | |
| 160 | (next 16 bits) = 0xFFFF | |
| 176 | (last 16 bits) = 0xFFFF | |
| 192 | TPA (first 16 bits) = 0x8064 | |
| 208 | (last 16 bits) = 0x6400 | |
| 224 | PREFIX = 24 | Spare (8 bits) |
| 240 | R (first 16 bits) = 0x0000 | |
| 256 | (last 16 bits) = 0x00FF | |

In the above-mentioned example the mechanism was explained in connection with the internet protocol version 4. In the following possible implementation it will be explained for the internet protocol version 6 (IPv6).

The proposed mechanism can be applied to the Neighbor discovery protocol (NDP, RFC 4861) in IPv6 (RFC 2460). Neighbor discovery is a protocol in the IPv6 protocol suite, with corresponding functionality to ARP in IPv4.

In order to apply the mechanism to IPv6, it is possible to add a new message as collect request message, here the message Neighbor solicitation over subnet to NDP. The additional message can be handled in the requesting and responding nodes in the same way as described above in connection with IPv4.

In this new collect request message, the parameter network prefix length (PREFIX) has the purpose to inform the receiving host about the subnet for which the Neighbor solicitation is applicable. If the receiving host's IP address belongs to the requested subnet, it shall respond to the received request. Otherwise the receiving host shall not respond.

Since the IPv6 address format defines a minimum subnet size of 64 bits corresponding to approximately $1.84 \times 10^{19}$ addresses, the proposed mechanism should be additionally limited to a predefined and configured number of IP hosts in the subnetwork. For IPv6 the network prefix length PREFIX, shall not be used for calculating the maximum number of connected network nodes in the subnetwork. Instead, a third parameter, a predefined maximum number of connected hosts in the subnet, is used. This parameter, also named MAXHOSTS, may be configured in the collecting node per network interface. In the basic and advanced mechanism described above $N_{sub}$ is calculated using the parameter PREFIX or determined from the third parameter. For IPv6 $N_{sub}$ will be assigned as $N_{sub}$ = MAXHOSTS. Thus, $N_{sub}$ corresponds to the third parameter.

The other procedures in the basic and advanced mechanism can be used for NDP in the same way as described for ARP.

The new collect request message is packed within an ICMPv6 packet format. The following table describes the format of the collect request message:

| Neighbor Solicitation over Subnet | | | | |
|---|---|---|---|---|
| bit offset | 0 - 7 | 8 - 15 | 16 - 23 | 23 - 31 |
| 0 | Type | Code | Checksum | |
| 32 | Reserved | | | |
| 64 | Target address (first 32 bits) | | | |
| 96 | (next 32 bits) | | | |
| 128 | (next 32 bits) | | | |
| 160 | (last 32 bits) | | | |
| 192 | PREFIX | Reserved | | |
| 224 | MAXHOSTS | | | |
| 256 | R or RESPTIME | | | |
| 288 | Tlearn (optional) | | | |
| 320 | Options... | | | |

*Type* field for the new message shall be selected from the list of the unassigned ICMPv6 values according to IANA document Internet Control Message Protocol version 6 (ICMPv6) Parameters, e.g.:

- Type=160 (Neighbor Solicitation over Subnet)

ICMP fields *Code, Checksum* and *Reserved* keep the same meaning as in the standard NDP Neighbor Solicitation message.

*Target address* field contains the solicited network address (without the network prefix length), for example:

| 12AB:0000:0000:CD30:0000:0000:0000:0000/60 | solicited network address (complete) |
|---|---|
| 12AB:0000:0000:CD30:0000:0000:0000:0000 | solicited network address |
| 60 | network prefix length |
| 12AB:0000:0000:CD3 | network prefix |

The following new fields can be added to the *Neighbor Solicitation over Subnet* message:

- PREFIX (8 bits) - network prefix length (first parameter)

- MAXHOSTS (32 bits) - maximum number of connected hosts in the subnet (third parameter)

- R (32 bits) - rate of ARP replies in given time or RESPTIME (32 bits) - Maximum response time in milliseconds (second parameter)

- $T_{learn}$ - optional - learning period in milliseconds

The "Options" part of the message is left empty.

Clarification of parameter values:

- MAXHOSTS = 0 has no defined meaning (reserved)
- R=0 or RESPTIME = 0 means immediate response required

The IPv6 header fields for the *Neighbor Solicitation over Subnet* message contain the following values:

- Source Address - address assigned to the interface from which the solicitation is sent

- Destination Address - all-nodes multicast address

When the responding host receives the collect request message and the receiving host's IP address belongs to the requested subnetwork, it can respond with a Neighbor Advertisement message. The point of time for sending the Neighbor Advertisement shall be calculated according to the mechanism described above taking into account additional parameter MAXHOSTS for IPv6.

In case the basic mechanism is used for sending the response, the responding host may use a standard Neighbor Advertisement message according to RFC 4861.

In case the advanced mechanism is used, the responding host should send the Neighbor Advertisement message to all nodes multicast address in the IPv6 header (the same as described in RFC 4861 for the unsolicited Neighbor Advertisement message).

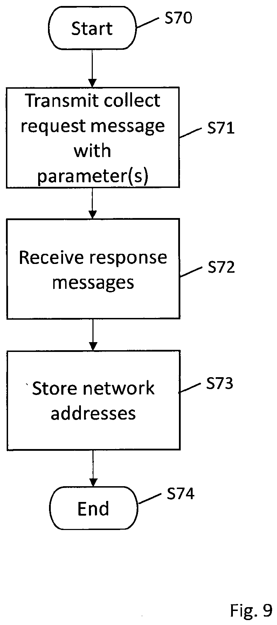

Figs. 9-11 discussed in further detail below relate to the collecting node or the responding node and are valid for both implementations, IPv4 and IPv6. Fig. 9 summarizes the steps carried out by the collecting node. The method starts in step S70 for the collecting node. The collecting node transmits a collect request message in step S71 to at least all nodes of the subnetwork. The collect request message comprises at least the first parameter allowing the packet subnetwork to be determined. Depending on the fact which of the other parameters are preconfigured in the different network nodes or may be transmitted to the other network nodes by other mechanisms, the request message can furthermore include the following parameters:

A second parameter including the example parameters R or RESPTIME mentioned above with which the receiving node can determine a response rate which defines an expected amount of response messages to be received from all the other network nodes of this subnetwork in a defined time period such as timeslot $T_{learn}$. The second parameter can comprise the response time or a response rate as shown in the examples above. Furthermore, as discussed above a third (MAXHOSTS) and fourth ($T_{learn}$) parameter may be included in the received message. In step S72 of Fig. 9 the collecting node receives the different response messages so that in step S73 the network node can store the corresponding network addresses received in the response messages. The method ends in step S74.

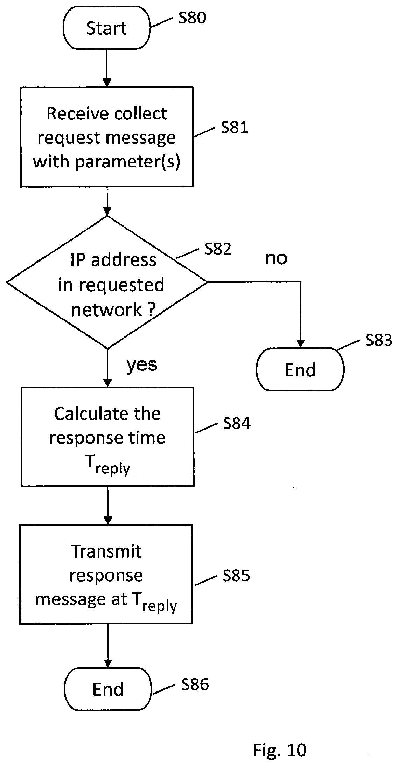

In Fig. 10 the method is summarized that is carried out by a responding node according to a basic mechanism. The method starts in step S80 and in step S81 the collect request message transmitted in step S71 is received by one of the responding nodes. In step S82 the responding node then checks whether the collect request message is a message for the subnetwork in which the receiving node is located. If this is not the case the method ends in step S83. If, however, the receiving node is in the subnetwork for which the collect request message is received the responding node will calculate a response time $T_{reply}$ in step S84. Different options for determining $T_{reply}$ were discussed above. The response message is then actually transmitted at the calculated response time in step S85. The method ends in step S86.

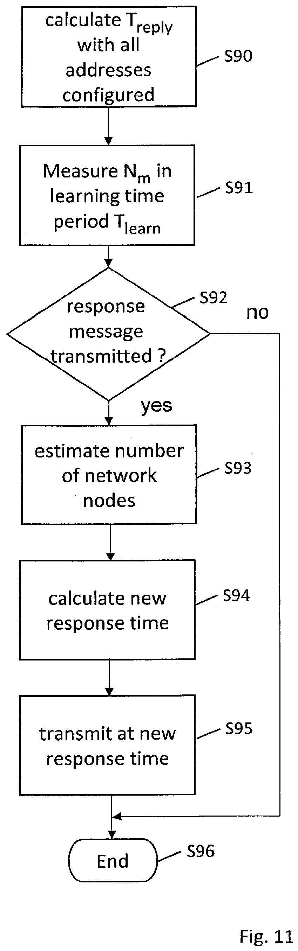

Fig. 11 shows some more detailed aspect of the advanced mechanism. In step S90, after having received the collect request message the responding node and each of the responding nodes of the subnetwork calculate a reply time based on the assumption that all possible addresses are configured in the subnetwork. Additionally, the responding node measures the response messages $N_m$ in the learning time period $T_{learn}$ in step S91. This measuring of the response messages helps to determine the actual number of network nodes present in the subnetwork. It is checked in step S92 whether the response message has already been sent. If not, the number of network nodes is estimated in step S93. In the example above this number was $N_{subm}$. Based on this more precise number of network nodes in the subnetwork it is possible to calculate a new response time in step S94 and the responding node can then transmit a response message at the newly calculated response time in step S95. The method then ends in step S96.

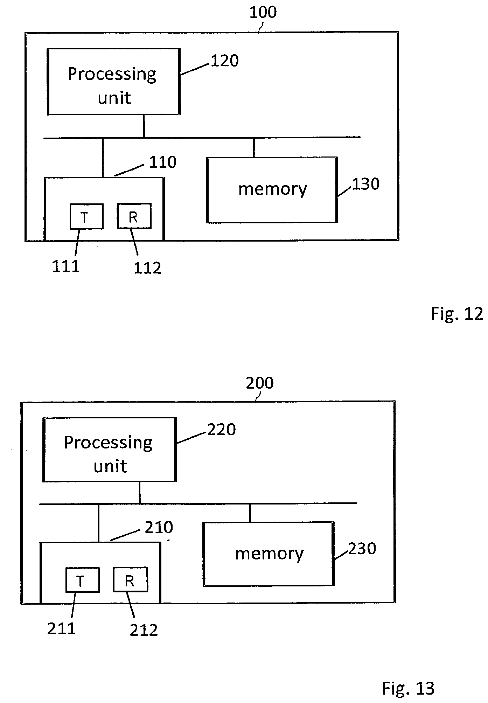

Fig. 12 is a schematic illustration of a collecting node 100. The collecting node comprises an interface 110 comprising a transmitter 111 and a receiver 112, the interface 110 being used for the communication with other network nodes or other entities inside or outside the network or the subnetwork. Transmitter 111 represents the possibility to transmit user data or control messages to other entities, receiver 112 symbolizing the possibility to receive user data or control messages from other entities. Furthermore, a processing unit 120 is provided, e.g. a multicore processor. The processing unit 120 is responsible for the operation of the collecting node. The collecting node 100 furthermore comprises a memory 130. The memory may store a program code that can be executed by the processing unit 120. Executing the program code can cause the collecting node 100 or the processing unit 120 to perform techniques described above or below in which the collecting node is involved. Memory 130 can furthermore store the collected addresses collected with the collect request message.

Fig. 13 shows a schematic illustration of a responding node 200. The responding node comprises an interface 210 used for communication with other entities or nodes inside and outside the network or subnetwork. Transmitter 211 symbolizes the possibility to transmit user data or control messages to other entities, the receiver 212 symbolizing the possibility to receive messages from other nodes or entities. Receiver 212 may receive the collect request message issued by collecting node 100. The responding node furthermore comprises a processing unit 220 controlling the operation of the node. A memory 230 is provided storing a program code that can be executed by the processing unit 220. Executing the program code can cause the responding node 200 to perform techniques described above or below in which the responding node is involved.

The different functional entities may be implemented by hardware or software, firmware or a combination thereof. It should be understood that the different nodes 100 and 200 can comprise further functional entities such as a human machine interface or a display, however, for the sake of clarity only those entities needed for the understanding of the invention are discussed.

From the above discussion of the different embodiments some general conclusions can be drawn for the collecting node and the responding node.

As far as the collecting node is concerned the collecting node may set a timeout until when the response messages from the other network nodes have to be received. When the timeout occurs the collecting node considers possible network nodes of the other network nodes from which no response messages received before the timeout as non-existing in the packet subnetwork.

If an address is present in the memory for one of the network nodes and if no response message is received from said one network node before the timeout occurs for this address, the address is removed from the memory. The collect request message can comprise different parameters which help to determine whether the receiving node is part of the subnetwork in question and used to determine a response time $T_{reply}$. Furthermore, the collect request message can comprise a learning time period $T_{learn}$ allowing the other nodes to determine an estimated number of network nodes $N_{subm}$ configured in the packet subnetwork.

As far as the responding node is concerned, the second parameter can be one of a response rate or a response time. Furthermore, the collect request message may comprise a third parameter indicating a maximum number of network nodes in the subnetwork. The second parameter may be preconfigured in the different nodes of the subnetwork or may be received together with the collect request message as part of the collect request message.

The response time $T_{reply}$ can be determined based on a predefined distribution function which distributes the response time $T_{reply}$ within a time range after the request message is received according to predefined distribution. The distribution may be a uniform distribution, however, any other distribution may be used as long as all network nodes of the subnetwork use the same distribution.

For the determination of the response time $T_{reply}$ a processing timeslot available for the collecting node to process one response message based on second parameter may be determined.

For the determination of the response time it is possible to determine a measured number of response messages $N_m$ present in the subnetwork in the learning time period $T_{learn}$. Furthermore, a new response time $T_{reply1}$ is calculated taking into account the measured number of response messages $N_m$. The learning time period $T_{learn}$ may be received from the collecting node or may be preconfigured in the responding node.

Furthermore, the estimated number of network nodes $N_{subm}$ may be determined based on the measured number of response messages $N_m$, a number of addresses of the subnetwork $N_{sub}$ determined using the first parameter, based on the second parameter and the learning time period $T_{learn}$. Thus, the responding node can determine the response time in the advanced mechanism based on the available parameters and the measured number of response messages in the learning time period.

To be more specific, the estimated number of network nodes $N_{subm}$ can be determined by extrapolating the measured number of response messages $N_m$ in the learning time period $T_{learn}$ using a predefined distribution of response messages in time to a total time period $T_{total}$ needed to send the response messages from all packet addresses in the subnetwork. With the number of measured response messages in the learning time period and based on the fact how the response messages evolve over time, i.e. the predefined distribution, the total number of network nodes can be estimated quite precisely.

Additionally, it is possible to estimate a remaining number of response messages NRE after the learning time period $T_{learn}$. Furthermore, a total time $T_{totalm}$ is determined that is needed to send response messages for the estimated number of network nodes $N_{subm}$ and a new response time is determined by distributing the remaining number of response messages $N_{subm} - N_m$ over a time range after the learning time period $T_{learn}$ and the total time $T_{totalm}$ using a predefined distribution of response messages. Again, preferably a uniform distribution of response messages can be used as this generates less congestion at the collecting node. The response messages transmitted in the learning time period can be transmitted to all nodes of the subnetwork, whereas the response messages transmitted after the learning time period may only be transmitted to the collecting node in order to avoid unnecessary traffic in the subnetwork.

The maximum number of packet addresses $N_{sub}$ may be determined from the first parameter. Furthermore, the collect request message can comprise a third parameter indicating a maximum number of network nodes connected to the packet subnetwork wherein the maximum number of packet addresses $N_{sub}$ is determined from this third parameter. The collect request message and the response messages may be extensions of an address resolution protocol ARP or of a Neighbor discovery protocol, NDP. When the system comprising a collecting node and several responding nodes is considered, the different responding nodes calculate their corresponding response times such that a uniform distribution of response messages is obtained in a time range after the collect request message is received.

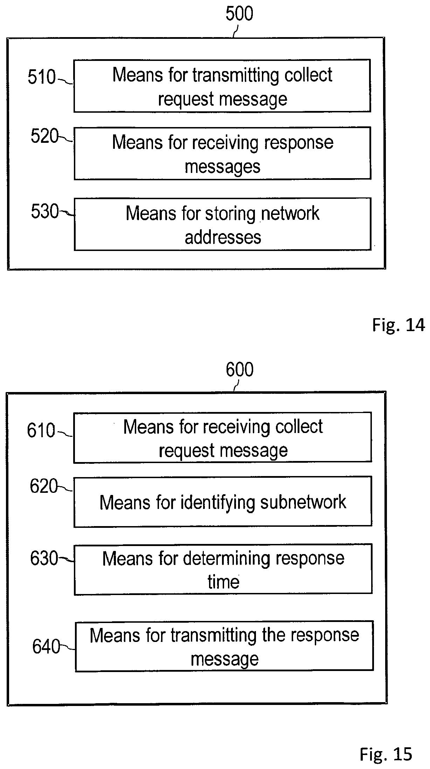

Referring to Fig. 14, a device 500 is provided which can be a collecting node as discussed above. The device can comprise means 510 for transmitting the collect request message. The device further comprises means for receiving the response messages from the different responding nodes (means 520). Additionally means 530 are provided for storing the network addresses.

Fig. 15 discloses a device 600 which can be the responding node mentioned above. The device 600 comprises means for receiving the collect request message 610 and means for identifying the subnetwork 620. When the means for identifying the subnetwork 620 checked that the received collect request message is for the own subnetwork, means for determining the response time 630 can determine the response time as mentioned in detail above. The means for transmitting the response time can then actually transmit the response message at the determined response time.

The computer readable storage medium on which the computer programs are stored could be any computer readable signal medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Summarizing, above techniques have been illustrated which provide an efficient way to inform a network node of a subnetwork about network addresses of other network nodes in a subnetwork. The solution has the advantage that only one request message is needed instead of many. Furthermore, the responding nodes can control the amount of response messages over time. The mechanism can be adapted to a network using a defined maximum response time as well to a network using a constant rate of response messages. The mechanism is furthermore effective both at start-up of a network node and at the regular refresh of the table storing the network addresses. It can be used in network handling user traffic due to controlled ARP overhead. Furthermore, the mechanism is applicable for different address formats such as IPv4 or IPv6.

**Claims**

1. A method for collecting addresses of other network nodes (200-202) located in a packet subnetwork (50) of a packet network by a collecting node (100) of the packet subnetwork (50), comprising:

    - transmitting a collect request message to the other network nodes (200-202) of the packet subnetwork (50) requesting all the other network nodes (200-202) to inform the collecting node (100) of their corresponding address, the collect request message comprising the following parameters:

        - a first parameter allowing the packet subnetwork (50) to be determined, wherein the first parameter describes a network prefix or network mask, and
        - a second parameter which is one of a response rate and a response time, wherein when the second parameter is the response time, the response rate is determined based on the number of nodes in the packet subnetwork (50) and the response time, wherein when the second parameter is the response rate, the response time is determined based on a maximum number of nodes in the packet subnetwork (50) derived from the first parameter and the response rate, and wherein the response rate defines an expected amount of response messages received from the other network nodes (200-202) in a defined time in response to the collect request message,

    - receiving the response messages from at least some of the other network nodes (200-202), wherein the response messages are transmitted by the at least some of the other network nodes (200-202) at a response time, $T_{reply}$, wherein the response time, $T_{reply}$, is determined taking the second parameter into account, and wherein each response message comprising the address of the corresponding network node, and
    - storing the addresses of the at least some other network nodes (200-202) in a memory (130).

2. The method according to claim 1, further comprising

    - setting a timeout until when the response messages from the other network nodes (200-202) have to be received, wherein when the timeout occurs, the collecting node (100) considers possible network nodes of the other network nodes (200-202) from which no response message is received before the timeout as non-existing in the packet subnetwork (50).

3. A method for responding to a collect request message issued by a collecting node (100) located in a packet subnetwork (50) of a packet network, comprising at a responding node (200-202):

- receiving the collect request message from the collecting node (100), the collect request message requesting all other network nodes of the packet subnetwork (50) to inform the collecting node (100) of their corresponding address and comprises at least the following parameters:

- a first parameter allowing the packet subnetwork (50) of the packet network to be determined, wherein the first parameter describes a network prefix or network mask, and
- a second parameter which is one of a response rate and a response time, wherein when the second parameter is the response time, the response rate is determined based on the number of nodes in the packet subnetwork (50) and the response time, wherein when the second parameter is the response rate, the response time is determined based on a maximum number of nodes in the packet subnetwork (50) derived from the first parameter and the response rate, and wherein the response rate defines an expected amount of response messages received from the other network nodes in a defined time in response to the collect request message,

- determining whether the responding node (200-202) is located in the packet subnetwork (50) for which the collect request message is received, wherein in the affirmative,
- determining a response time, $T_{reply}$, for transmitting a response message to the collecting node (100) in which the collecting node (100) is informed about the address of the responding node (200-202), wherein the response time, $T_{reply}$, is determined taking the second parameter into account, and
- transmitting the response message at the determined response time, $T_{reply}$.

4. The method according to any of the preceding claims, wherein, the collect request message comprises a third parameter indicating the maximum number of network nodes in the packet subnetwork (50).

5. The method according to any of claims 3 to 4, wherein the response time, $T_{reply}$, is based on an estimated number of network nodes, $N_{subm}$, configured in the packet subnetwork (50).

6. The method according to claim 5, wherein determining the response time, $T_{reply}$, comprises:

- determining a measured number of the response messages, $N_m$, present in the packet subnetwork (50) in a learning time period, $T_{learn}$,
- calculating a new response time, $T_{reply1}$, taking into account the measured number of response messages, $N_m$, wherein the learning time period, $T_{learn}$, is received from the collecting node (100) or is preconfigured in the responding node (200-202), and wherein the estimated number of network nodes, $N_{subm}$, is determined:

- based on the measured number of response messages, $N_m$, a number of addresses of the subnetwork, $N_{sub}$, determined using the first parameter, based on the second parameter, and the learning time period, $T_{learn}$, or
- by extrapolating the measured number of response messages, $N_m$, in the learning time period, $T_{learn}$, using a predefined distribution of response messages in time to a total time period, $T_{total}$, needed to send the response messages from all packet addresses of the packet subnetwork (50).

7. The method according to claim 6, further comprising:

- estimating a remaining number of response messages after the learning time period, $T_{learn}$,
- determining a total time, $T_{totalm}$, needed to send response messages for the estimated number of network nodes, $N_{subm}$, and
- determining a new response time, $T_{reply1}$, by distributing the remaining number of response messages over a time range after the learning time period, $T_{learn}$, and the total time, $T_{totalm}$, using a predefined distribution of response messages.

8. The method according to claims 6 or 7, wherein the response messages are transmitted in the learning time period, $T_{learn}$, to all nodes in the packet subnetwork (50), wherein the response messages transmitted after the learning

time period, $T_{learn}$, are transmitted only to the collecting node (100).

9. A collecting node (100) of a packet subnetwork (50) configured to collect network addresses of other network nodes (200-202) located in the packet subnetwork (50), the collecting node (100) comprising a memory (130) and at least one processor (120), the memory (130) containing instructions executable by said at least one processor (120), wherein the collecting node (100) is operative to:

- transmit a collect request message to the other network nodes (200-202) of the packet subnetwork (50) requesting all the other network nodes (200-202) to inform the collecting node (100) of their corresponding address, the collect request message comprising the following parameters:

- a first parameter allowing the packet subnetwork (50) to be determined, wherein the first parameter describes a network prefix or network mask, and
- a second parameter which is one of a response rate or a response time, wherein when the second parameter is the response time, the response rate is determined based on the number of nodes in the packet subnetwork (50) and the response time, wherein when the second parameter is the response rate, the response time is determined based on a maximum number of nodes in the packet subnetwork (50) derived from the first parameter and the response rate, and wherein the response rate defines an expected amount of response messages received from the other network nodes (200-202) in a defined time in response to the collect request message,

- receive response messages from at least some of the other network nodes (200-202), wherein the response messages are transmitted by the at least some of the other network nodes (200-202) at a response time, $T_{reply}$, wherein the response time, $T_{reply}$, is determined taking the second parameter into account, and wherein each response message comprising the network address of the corresponding network node, and
- store the network addresses of the at least some other network nodes (200-202) in the memory (130).

10. The collecting node (100) of claim 9, further being operative to carry out a method as mentioned in claim 2.

11. A responding node (200-202) configured to respond to a collect request message issued by a collecting node (100) located in an packet subnetwork (50) of an packet network, comprising a memory (230) and at least one processor (220), said memory (230) containing instructions executable by said at least one processor (220), wherein the responding node (200-202) is operative to:

- receive the collect request message from the collecting node (100), the collect request message requesting all other network nodes of the packet subnetwork (50) to inform the collecting node (100) of their corresponding address and comprises at least the following parameters:

- a first parameter allowing the packet subnetwork (50) of the packet network to be determined, wherein the first parameter describes a network prefix or network mask, and
- a second parameter which is one of a response rate and a response time, wherein when the second parameter is the response time, the response rate is determined based on the number of nodes in the packet subnetwork (50) and the response time, wherein when the second parameter is the response rate, the response time is determined based on a maximum number of nodes in the packet subnetwork (50) derived from the first parameter and the response rate, and wherein the response rate defines an expected amount of response messages received from the other network nodes in a defined time in response to the collect request message,

- determine whether the responding node (200-202) is located in the packet subnetwork (50) for which the collect request message is received, wherein in the affirmative the collecting node is operative to:

- determine a response time, $T_{reply}$, for transmitting a response message to the collecting node (100) in which the collecting node (100) is informed about the address of the responding node (200-202), wherein the response time, $T_{reply}$, is determined taking the second parameter into account, and
- transmit the response message at the determined response time, $T_{reply}$.

12. The responding node (200-202) of claim 11, further being operative to carry out a method as mentioned in any of claims 3 to 8.

13. A computer readable storage medium, having stored thereon a computer program, wherein execution of the computer program by at least one processor causes the at least one processor to execute a method as mentioned in any of claims 1 to 8.

**Patentansprüche**

1. Verfahren zum Sammeln von Adressen anderer Netzwerkknoten (200 - 202), die sich in einem Paketsubnetzwerk (50) eines Paketnetzwerks befinden, durch einen Sammelknoten (100) des Paketsubnetzwerks (50); wobei das Verfahren Folgendes umfasst:

- Übertragen einer Sammelanforderungsnachricht an die anderen Netzwerkknoten (200 - 202) des Paketsubnetzwerks (50), wobei alle anderen Netzwerkknoten (200 - 202) aufgefordert werden, den Sammelknoten (100) über ihre entsprechende Adresse zu informieren; wobei die Sammelanforderungsnachricht die folgenden Parameter umfasst:

- einen ersten Parameter, mit dem das Paketsubnetzwerk (50) bestimmt werden kann, wobei der erste Parameter ein Netzwerkpräfix oder eine Netzwerkmaske beschreibt, und
- einen zweiten Parameter, der eine Antwortrate oder eine Antwortzeit ist, wobei, wenn der zweite Parameter die Antwortzeit ist, die Antwortrate basierend auf der Anzahl der Knoten im Paketsubnetzwerk (50) und der Antwortzeit bestimmt wird, wobei, wenn der zweite Parameter die Antwortrate ist, die Antwortzeit basierend auf einer maximalen Anzahl von Knoten in dem Paketsubnetzwerk (50) bestimmt wird, die aus dem ersten Parameter und der Antwortrate abgeleitet wird, und wobei die Antwortrate eine erwartete Anzahl von Antwortnachrichten definiert, die von den anderen Netzwerkknoten (200 - 202) in einer definierten Zeit als Antwort auf die Sammelanforderungsnachricht empfangen werden;

- Empfangen der Antwortnachrichten von mindestens einigen der anderen Netzwerkknoten (200 - 202), wobei die Antwortnachrichten von mindestens einigen der anderen Netzwerkknoten (200 - 202) zu einer Antwortzeit, $T_{reply}$, übertragen werden, wobei die Antwortzeit $T_{reply}$ unter Berücksichtigung des zweiten Parameters bestimmt wird und wobei jede Antwortnachricht die Adresse des entsprechenden Netzwerkknotens umfasst, und
- Speichern der Adressen von mindestens einigen anderen Netzwerkknoten (200 - 202) in einem Speicher (130).

2. Verfahren nach Anspruch 1, das ferner Folgendes umfasst:

- Festlegen eines Timeout, zu dem die Antwortnachrichten von den anderen Netzwerkknoten (200 - 202) empfangen werden müssen, wobei beim Auftreten des Timeout der Sammelknoten (100) mögliche Netzwerkknoten der anderen Netzwerkknoten (200 - 202), von denen vor dem Timeout keine Antwortnachricht empfangen wird, im Paketsubnetzwerk (50) als nicht vorhanden betrachtet.

3. Verfahren zum Antworten auf eine Sammelanforderungsnachricht, die von einem Sammelknoten (100) ausgegeben wird, der sich in einem Paketsubnetzwerk (50) eines Paketnetzwerks befindet, wobei das Verfahren an einem antwortenden Knoten (200 - 202) Folgendes umfasst:

- Empfangen der Sammelanforderungsnachricht vom Sammelknoten (100), wobei die Sammelanforderungsnachricht alle anderen Netzwerkknoten des Paketsubnetzwerks (50) auffordert, den Sammelknoten (100) über ihre entsprechende Adresse zu informieren, und mindestens die folgenden Parameter umfasst:

- einen ersten Parameter, mit dem das Paketsubnetzwerk (50) des Paketnetzwerks bestimmt werden kann; wobei der erste Parameter ein Netzwerkpräfix oder eine Netzwerkmaske beschreibt, und
- einen zweiten Parameter, der eine Antwortrate oder eine Antwortzeit ist, wobei, wenn der zweite Parameter die Antwortzeit ist, die Antwortrate basierend auf der Anzahl der Knoten im Paketsubnetzwerk (50) und der Antwortzeit bestimmt wird, wobei, wenn der zweite Parameter die Antwortrate ist, die Antwortzeit basierend auf einer maximalen Anzahl von Knoten in dem Paketsubnetzwerk (50) bestimmt wird, die aus dem ersten Parameter und der Antwortrate abgeleitet wird, und wobei die Antwortrate eine erwartete Anzahl von Antwortnachrichten definiert, die von den anderen Netzwerkknoten in einer definierten Zeit als Antwort auf die Sammelanforderungsnachricht empfangen werden;

- Bestimmen, ob sich der antwortende Knoten (200 - 202) in dem Paketsubnetzwerk (50) befindet, für das die Sammelanforderungsnachricht empfangen wird, wobei im affirmativen Fall Folgendes gilt:
- Bestimmen einer Antwortzeit $T_{reply}$ zum Übertragen einer Antwortnachricht an den Sammelknoten (100), in der der Sammelknoten (100) über die Adresse des antwortende Knotens (200 - 202) informiert wird; wobei die Antwortzeit $T_{reply}$ unter Berücksichtigung des zweiten Parameters bestimmt wird und
- Übertragen der Antwortnachricht zur festgelegten Antwortzeit $T_{reply}$.

4. Verfahren nach einem der vorhergehenden Ansprüche, wobei die Sammelanforderungsnachricht einen dritten Parameter umfasst, der die maximale Anzahl von Netzwerkknoten in dem Paketsubnetzwerk (50) angibt.

5. Verfahren nach einem der Ansprüche 3 bis 4, wobei die Antwortzeit $T_{reply}$ auf einer geschätzten Anzahl von Netzwerkknoten $N_{subm}$ basiert, die in dem Paketsubnetzwerk (50) konfiguriert sind.

6. Verfahren nach Anspruch 5, wobei das Bestimmen der Antwortzeit $T_{reply}$ Folgendes umfasst:

   - Bestimmen einer gemessenen Anzahl der Antwortnachrichten $N_m$, die in dem Paketsubnetzwerk (50) in einer Lernzeitperiode, $T_{learn}$, vorhanden sind,
   - Berechnen einer neuen Antwortzeit, $T_{reply1}$, unter Berücksichtigung der gemessenen Anzahl von Antwortnachrichten, $N_m$, wobei die Lernzeitperiode $T_{learn}$ vom Sammelknoten (100) empfangen oder im antwortenden Knoten (200 - 202) vorkonfiguriert wird und wobei die geschätzte Anzahl von Netzwerkknoten $N_{subm}$ folgendermaßen bestimmt wird:
   - basierend auf der gemessenen Anzahl von Antwortnachrichten, $N_m$, einer Anzahl von Adressen des Teilnetzwerks, $N_{sub}$, die unter Verwendung des ersten Parameters basierend auf dem zweiten Parameter bestimmt wird, und der Lernzeitperiode, $T_{learn}$, oder
   - durch Extrapolation der gemessenen Anzahl von Antwortnachrichten, $N_m$, in der Lernzeitperiode, $T_{learn}$, unter Verwendung einer vordefinierten Verteilung von Antwortnachrichten in der Zeit bis zu einem Gesamtzeitraum, $T_{total}$, der zum Übertragen der Antwortnachrichten von allen Paketadressen des Paketsubnetzwerks (50) benötigt wird.

7. Verfahren nach Anspruch 6, das ferner Folgendes umfasst:

   - Schätzen einer verbleibenden Anzahl von Antwortnachrichten nach der Lernzeitperiode $T_{learn}$,
   - Bestimmen einer Gesamtzeit $T_{totalm}$, die zum Übertragen von Antwortnachrichten für die geschätzte Anzahl von Netzwerkknoten $N_{subm}$ benötigt wird, und
   - Bestimmen einer neuen Antwortzeit, $T_{reply1}$, durch Verteilen der verbleibenden Anzahl von Antwortnachrichten über einen Zeitbereich nach der Lernzeitperiode $T_{learn}$ und der Gesamtzeit $T_{totalm}$ unter Verwendung einer vordefinierten Verteilung von Antwortnachrichten.

8. Verfahren nach Anspruch 6 oder 7, wobei die Antwortnachrichten in der Lernzeitperiode $T_{learn}$ an alle Knoten im Paketsubnetzwerk (50) übertragen werden; wobei die nach der Lernzeitperiode $T_{learn}$ übertragenen Antwortnachrichten nur an den Sammelknoten (100) übertragen werden.

9. Sammelknoten (100) eines Paketsubnetzwerks (50), der dafür konfiguriert ist, Netzwerkadressen anderer Netzwerkknoten (200 - 202) zu sammeln, die sich in dem Paketsubnetzwerk (50) befinden, wobei der Sammelknoten (100) einen Speicher (130) und mindestens einen Prozessor (120) umfasst, wobei der Speicher (130) Anweisungen enthält, die von dem mindestens einen Prozessor (120) ausführbar sind, wobei der Sammelknoten (100) für Folgendes ausgelegt ist:

   - Übertragen einer Sammelanforderungsnachricht an die anderen Netzwerkknoten (200 - 202) des Paketsubnetzwerks (50), wobei alle anderen Netzwerkknoten (200 - 202) aufgefordert werden, den Sammelknoten (100) über ihre entsprechende Adresse zu informieren; wobei die Sammelanforderungsnachricht die folgenden Parameter umfasst:

   - einen ersten Parameter, mit dem das Paketsubnetzwerk (50) bestimmt werden kann, wobei der erste Parameter ein Netzwerkpräfix oder eine Netzwerkmaske beschreibt, und
   - einen zweiten Parameter, der eine Antwortrate oder eine Antwortzeit ist, wobei, wenn der zweite Parameter die Antwortzeit ist, die Antwortrate basierend auf der Anzahl der Knoten im Paketsubnetzwerk (50) und der Antwortzeit bestimmt wird, wobei, wenn der zweite Parameter die Antwortrate ist, die Antwortzeit basierend auf einer maximalen Anzahl von Knoten in dem Paketsubnetzwerk (50) bestimmt wird, die aus dem ersten Parameter und der Antwortrate abgeleitet wird, und wobei die Antwortrate eine erwartete Anzahl von Antwortnachrichten definiert, die von den anderen Netzwerkknoten (200 - 202) in einer definierten Zeit als Antwort auf die Sammelanforderungsnachricht empfangen werden;

- Empfangen von Antwortnachrichten von mindestens einigen der anderen Netzwerkknoten (200 - 202), wobei die Antwortnachrichten von mindestens einigen der anderen Netzwerkknoten (200 - 202) zu einer Antwortzeit, $T_{reply}$, übertragen werden, wobei die Antwortzeit $T_{reply}$ unter Berücksichtigung des zweiten Parameters bestimmt wird und wobei jede Antwortnachricht die Adresse des entsprechenden Netzwerkknotens umfasst, und
- Speichern der Netzwerkadressen von mindestens einigen anderen Netzwerkknoten (200 - 202) in dem Speicher (130).

10. Sammelknoten (100) nach Anspruch 9, der ferner dafür ausgelegt ist, ein Verfahren nach Anspruch 2 auszuführen.

11. Antwortender Knoten (200 - 202), der dafür konfiguriert ist, auf eine Sammelanforderungsnachricht zu antworten, die von einem Sammelknoten (100) ausgegeben wird, der sich in einem Paketsubnetzwerk (50) eines Paketnetzwerks befindet, der einen Speicher (230) und mindestens einen Prozessor (220) umfasst, wobei der Speicher (230) Anweisungen enthält, die von dem mindestens einen Prozessor (220) ausführbar sind; wobei der antwortende Knoten (200 - 202) für Folgendes ausgelegt ist:

- Empfangen der Sammelanforderungsnachricht vom Sammelknoten (100), wobei die Sammelanforderungsnachricht alle anderen Netzwerkknoten des Paketsubnetzwerks (50) auffordert, den Sammelknoten (100) über ihre entsprechende Adresse zu informieren, und mindestens die folgenden Parameter umfasst:

- einen ersten Parameter, mit dem das Paketsubnetzwerk (50) des Paketnetzwerks bestimmt werden kann; wobei der erste Parameter ein Netzwerkpräfix oder eine Netzwerkmaske beschreibt, und
- einen zweiten Parameter, der eine Antwortrate oder eine Antwortzeit ist, wobei, wenn der zweite Parameter die Antwortzeit ist, die Antwortrate basierend auf der Anzahl der Knoten im Paketsubnetzwerk (50) und der Antwortzeit bestimmt wird, wobei, wenn der zweite Parameter die Antwortrate ist, die Antwortzeit basierend auf einer maximalen Anzahl von Knoten in dem Paketsubnetzwerk (50) bestimmt wird, die aus dem ersten Parameter und der Antwortrate abgeleitet wird, und wobei die Antwortrate eine erwartete Anzahl von Antwortnachrichten definiert, die von den anderen Netzwerkknoten in einer definierten Zeit als Antwort auf die Sammelanforderungsnachricht empfangen werden;

- Bestimmen, ob sich der antwortende Knoten (200 - 202) in dem Paketsubnetzwerk (50) befindet, für das die Sammelanforderungsnachricht empfangen wird, wobei der Sammelknoten im affirmativen Fall für Folgendes ausgelegt ist:
- Bestimmen einer Antwortzeit, $T_{reply}$, zum Übertragen einer Antwortnachricht an den Sammelknoten (100), wobei der Sammelknoten (100) über die Adresse des antwortenden Knotens (200 - 202) informiert wird, wobei die Antwortzeit $T_{reply}$ unter Berücksichtigung des zweiten Parameters bestimmt wird und
- Übertragen der Antwortnachricht zur festgelegten Antwortzeit $T_{reply}$.

12. Antwortender Knoten (200 - 202) von Anspruch 11, der ferner dafür ausgelegt ist, ein Verfahren nach einem der Ansprüche 3 bis 8 auszuführen.

13. Computerlesbares Speichermedium, auf dem ein Computerprogramm gespeichert ist, wobei die Ausführung des Computerprogramms durch mindestens einen Prozessor bewirkt, dass der mindestens eine Prozessor ein Verfahren nach einem der Ansprüche 1 bis 8 ausführt.

**Revendications**

1. Procédé pour collecter des adresses d'autres nœuds de réseau (200-202), situés dans un sous-réseau à paquets (50) d'un réseau à paquets, par un nœud de collecte (100) du sous-réseau à paquets (50), comprenant :

- la transmission d'un message de demande de collecte aux autres nœuds de réseau (200-202) du sous-réseau à paquets (50) demandant à tous les autres nœuds de réseau (200-202) d'informer le nœud de collecte (100) de leur adresse correspondante, le message de demande de collecte comprenant les paramètres suivants :

- un premier paramètre permettant au sous-réseau à paquets (50) d'être déterminé, dans lequel le premier paramètre décrit un préfixe de réseau ou masque de réseau, et
- un deuxième paramètre qui est un d'un taux de réponse et d'un temps de réponse, dans lequel lorsque le deuxième paramètre est le temps de réponse, le taux de réponse est déterminé sur la base du nombre de nœuds dans le sous-réseau à paquets (50) et du temps de réponse, dans lequel, lorsque le deuxième paramètre est le taux de réponse, le temps de réponse est déterminé sur la base d'un nombre maximum de nœuds, dans le sous-réseau à paquets (50), dérivé du premier paramètre et du taux de réponse, et dans lequel le taux de réponse définit une quantité escomptée de messages de réponse reçus des autres nœuds de réseau (200-202) dans un temps défini en réponse au message de demande de collecte,

- la réception des messages de réponse à partir d'au moins certains des autres nœuds de réseau (200-202), dans lequel les messages de réponse sont transmis par les au moins certains des autres nœuds de réseau (200-202) à un temps de réponse, $T_{reply}$, dans lequel le temps de réponse, $T_{reply}$, est déterminé en prenant le deuxième paramètre en compte, et dans lequel chaque message de réponse comprend l'adresse du nœud de réseau correspondant, et
- le stockage des adresses des au moins certains autres nœuds de réseau (200-202) dans une mémoire (130).

2. Procédé selon la revendication 1, comprenant en outre

- le réglage d'un délai d'attente jusqu'à l'instant auquel les messages de réponse provenant des autres nœuds de réseau (200-202) doivent être reçus, dans lequel, lorsque le délai d'attente se produit, le nœud de collecte (100) considère d'éventuels nœuds de réseau des autres nœuds de réseau (200-202), à partir desquels aucun message de réponse n'est reçu avant le délai d'attente, comme étant non existants dans le sous-réseau à paquets (50).

3. Procédé pour répondre à un message de demande de collecte émis par un nœud de collecte (100) situé dans un sous-réseau à paquets (50) d'un réseau à paquets, comprenant, à un nœud de réponse (200-202) :

- la réception du message de demande de collecte à partir du nœud de collecte (100), le message de demande de collecte demandant à tous les autres nœuds de réseau du sous-réseau à paquets (50) d'informer le nœud de collecte (100) de leur adresse correspondante et comprenant au moins les paramètres suivants :

- un premier paramètre permettant au sous-réseau à paquets (50) du réseau à paquets d'être déterminé, dans lequel le premier paramètre décrit un préfixe de réseau ou masque de réseau, et
- un deuxième paramètre qui est un d'un taux de réponse et d'un temps de réponse, dans lequel, lorsque le deuxième paramètre est le temps de réponse, le taux de réponse est déterminé sur la base du nombre de nœuds dans le sous-réseau à paquets (50) et du temps de réponse, dans lequel, lorsque le deuxième paramètre est le taux de réponse, le temps de réponse est déterminé sur la base d'un nombre maximum de nœuds, dans le sous-réseau à paquets (50), dérivé du premier paramètre et du taux de réponse, et dans lequel le taux de réponse définit une quantité escomptée de messages de réponse reçus des autres nœuds de réseau dans un temps défini en réponse au message de demande de collecte,

- la détermination du fait que le nœud de réponse (200-202) est ou non situé dans le sous-réseau à paquets (50) pour lequel le message de demande de collecte est reçu, dans lequel, dans l'affirmative,
- la détermination d'un temps de réponse, $T_{reply}$, pour transmettre un message de réponse au nœud de collecte (100), dans lequel le nœud de collecte (100) est informé en ce qui concerne l'adresse du nœud de réponse (200-202), dans lequel le temps de réponse, $T_{reply}$, est déterminé en prenant le deuxième paramètre en compte, et
- la transmission du message de réponse au temps de réponse déterminé, $T_{reply}$.

4. Procédé selon une quelconque des revendications précédentes, dans lequel le message de demande de collecte comprend un troisième paramètre indiquant le nombre maximum de nœuds de réseau dans le sous-réseau à paquets (50).

5. Procédé selon l'une quelconque des revendications 3 à 4, dans lequel le temps de réponse, $T_{reply}$, est sur la base d'un nombre estimé de nœuds de réseau, $N_{subm}$, configurés dans le sous-réseau à paquets (50).

6. Procédé selon la revendication 5, dans lequel la détermination du temps de réponse, $T_{reply}$, comprend :

- la détermination d'un nombre mesuré des messages de réponse, $N_m$, présents dans le sous-réseau à paquets (50) dans une période d'apprentissage, $T_{learn}$,
- le calcul d'un nouveau temps de réponse, $T_{reply1}$, prenant en compte le nombre mesuré de messages de réponse, $N_m$, dans lequel la période d'apprentissage, $T_{learn}$, est reçue du nœud de collecte (100) ou est préconfigurée dans le nœud de réponse (200-202), et dans lequel le nombre estimé de nœuds de réseau, $N_{subm}$, est déterminé :

    - sur la base du nombre mesuré de messages de réponse, $N_m$, d'un nombre d'adresses du sous-réseau, $N_{sub}$, déterminé en utilisant le premier paramètre, sur la base du deuxième paramètre, et de la période d'apprentissage, $T_{learn}$, ou
    - en extrapolant le nombre mesuré de messages de réponse, $N_m$, dans la période d'apprentissage, $T_{learn}$, en utilisant une distribution prédéfinie de messages de réponse en temps par rapport à une période totale, $T_{total}$, nécessaire pour envoyer les messages de réponse à partir de toutes les adresses de paquet du sous-réseau à paquets (50).

7. Procédé selon la revendication 6, comprenant en outre :

    - l'estimation d'un nombre restant de messages de réponse après la période d'apprentissage, $T_{learn}$,
    - la détermination d'un temps total, $T_{totalm}$, nécessaire pour envoyer des messages de réponse pour le nombre estimé de nœuds de réseau, $N_{subm}$, et
    - la détermination d'un nouveau temps de réponse, $T_{reply}$, en distribuant le nombre restant de messages de réponse durant un intervalle de temps après la période d'apprentissage, $T_{learn}$, et le temps total, $T_{totalm}$, en utilisant une distribution prédéfinie de messages de réponse.

8. Procédé selon les revendications 6 ou 7, dans lequel les messages de réponse sont transmis dans la période d'apprentissage, $T_{learn}$, à tous les nœuds dans le sous-réseau à paquets (50), dans lequel les messages de réponse transmis après la période d'apprentissage, $T_{learn}$, sont transmis seulement au nœud de collecte (100).

9. Nœud de collecte (100) d'un sous-réseau à paquets (50) configuré pour collecter des adresses de réseau d'autres nœuds de réseau (200-202) situés dans le sous-réseau à paquets (50), le nœud de collecte (100) comprenant une mémoire (130) et au moins un processeur (120), la mémoire (130) contenant des instructions exécutables par ledit au moins un processeur (120), dans lequel le nœud de collecte (100) est opérationnel pour :

    - transmettre un message de demande de collecte aux autres nœuds de réseau (200-202) du sous-réseau à paquets (50) demandant à tous les autres nœuds de réseau (200-202) d'informer le nœud de collecte (100) de leur adresse correspondante, le message de demande de collecte comprenant les paramètres suivants :

        - un premier paramètre permettant au sous-réseau à paquets (50) d'être déterminé, dans lequel le premier paramètre décrit un préfixe de réseau ou masque de réseau, et
        - un deuxième paramètre qui est un d'un taux de réponse ou d'un temps de réponse, dans lequel, lorsque le deuxième paramètre est le temps de réponse, le taux de réponse est déterminé sur la base du nombre de nœuds dans le sous-réseau à paquets (50) et du temps de réponse, dans lequel, lorsque le deuxième paramètre est le taux de réponse, le temps de réponse est déterminé sur la base d'un nombre maximum de nœuds, dans le sous-réseau à paquets (50), dérivé du premier paramètre et du taux de réponse, et dans lequel

le taux de réponse définit une quantité escomptée de messages de réponse reçus des autres nœuds de réseau (200-202) dans un temps défini en réponse au message de demande de collecte,

    - recevoir des messages de réponse à partir d'au moins certains des autres nœuds de réseau (200-202), dans lequel les messages de réponse sont transmis par les au moins certains des autres nœuds de réseau (200-202) à un temps de réponse, $T_{reply}$, dans lequel le temps de réponse, $T_{reply}$, est déterminé en prenant le deuxième paramètre en compte, et dans lequel chaque message de réponse comprend l'adresse de réseau du nœud de réseau correspondant, et
    - stocker les adresses de réseau des au moins certains autres nœuds de réseau (200-202) dans la mémoire (130).

10. Nœud de collecte (100) selon la revendication 9, étant en outre opérationnel pour réaliser un procédé tel que mentionné dans la revendication 2.

11. Nœud de réponse (200-202) configuré pour répondre à un message de demande de collecte émis par un nœud de collecte (100) situé dans un sous-réseau à paquets (50) d'un réseau à paquets, comprenant une mémoire (230) et au moins un processeur (220), ladite mémoire (230) contenant des instructions exécutables par ledit au moins un processeur (220), dans lequel le nœud de réponse (200-202) est opérationnel pour :

- recevoir le message de demande de collecte à partir du nœud de collecte (100), le message de demande de collecte demandant à tous les autres nœuds de réseau du sous-réseau à paquets (50) d'informer le nœud de collecte (100) de leur adresse correspondante et comprend au moins les paramètres suivants :

- un premier paramètre permettant au sous-réseau à paquets (50) du réseau à paquets d'être déterminé, dans lequel le premier paramètre décrit un préfixe de réseau ou masque de réseau, et
- un deuxième paramètre qui est un d'un taux de réponse et d'un temps de réponse, dans lequel, lorsque le deuxième paramètre est le temps de réponse, le taux de réponse est déterminé sur la base du nombre de nœuds dans le sous-réseau à paquets (50) et du temps de réponse, dans lequel, lorsque le deuxième paramètre est le taux de réponse, le temps de réponse est déterminé sur la base d'un nombre maximum de nœuds, dans le sous-réseau à paquets (50), dérivé du premier paramètre et du taux de réponse, et dans lequel

le taux de réponse définit une quantité escomptée de messages de réponse reçus des autres nœuds de réseau dans un temps défini en réponse au message de demande de collecte,

- déterminer le fait que le nœud de réponse (200-202) est ou non situé dans le sous-réseau à paquets (50) pour lequel le message de demande de collecte est reçu, dans lequel, dans l'affirmative le nœud de collecte est opérationnel pour :

- déterminer un temps de réponse, $T_{reply}$, pour transmettre un message de réponse au nœud de collecte (100), dans lequel le nœud de collecte (100) est informé en ce qui concerne l'adresse du nœud de réponse (200-202), dans lequel le temps de réponse, $T_{reply}$, est déterminé en prenant le deuxième paramètre en compte, et
- transmettre le message de réponse au temps de réponse, $T_{reply}$, déterminé.

12. Nœud de réponse (200-202) selon la revendication 11, étant en outre opérationnel pour réaliser un procédé tel que mentionné dans l'une quelconque des revendications 3 à 8.

13. Support de stockage lisible par ordinateur, ayant, stocké sur celui-ci, un programme d'ordinateur, dans lequel l'exécution du programme d'ordinateur par au moins un processeur fait en sorte que l'au moins un processeur exécute un procédé tel que mentionné dans l'une quelconque des revendications 1 à 8.

Does my IP
address
belong to
Subnet X?

Broadcast
ARP_Request to
all hosts on LAN Y

**200**

ARP_Request

128.100.100.10   H1

50

ARP_Reply

**201**   ARP_Request

128.100.100.20   H2

ARP_Reply

ARP_Request

130.10.10.10   H3

H3's IP address
does not belong
to Subnet X =>
no ARP_Reply

**300**

ARP_Request:
Subnet X=128.100.100.0/24

X   R

**100**

**202**   ARP_Request

128.100.100.100   Hn

LAN Y

ARP_Reply

Fig. 1

```
        ┌──────────────┐
        │    Start     │ ──── S10
        └──────┬───────┘
               │
               ▼
     ┌──────────────────────┐
     │  Send ARP request    │ ──── S11
     │     over subnet      │
     └──────────┬───────────┘
                │
                ▼
     ┌──────────────────────┐
     │  Start timer T_subnet │ ──── S12
     └──────────┬───────────┘
                │
                ▼
              (  )
```

Send_req_1 or
Send_req_2

Fig. 2a

Fig. 2b

Fig. 3

Fig. 4

Recv _adv_1

S40

Start

Receive
collect
request
message
S41

Does
my IP address
belong to
requested
Subnet ?    No    S43    S42

End

Yes

Calculate timers for
T learn and Treply    S44

Start timers for
T learn and T reply    S45

Recv_adv_1 or
Recv_adv_2 or
Rec_adc_3

Receive
ARP
response
message    S46

Does my IP
address belong
to the same
subnet
?    No    S47

Yes

Increase counter
N_m    S48

Recv _adv _1 or
Recv _adv _2 or
Recv _adv _3

Fig. 5a

Recv_Adv_3

Recv_adv_4

Recv_adv_2

Timer $T_{reply}$ expires — S50

Timer $T_{learn}$ expires — S55

Timer $T_{reply1}$ expires — S60

Stop timer $T_{learn}$ — S51

Stop timer $T_{reply}$ — S56

Send *ARP reply* — S61

Send *ARP reply* — S52

Calculate estimated number of connected hosts $N_{subm}$ — S57

End — S62

End — S53

Calculate new $T_{reply1}$ based on $N_{subm}$ — S58

Start timer Treply1 — S59

Recv_adv_4

Fig. 5b

Fig. 6

Fig. 7

Fig. 8

Start — S70

Transmit collect
request message
with
parameter(s) — S71

Receive response
messages — S72

Store network
addresses — S73

End — S74

Fig. 9

Fig. 10

calculate $T_{reply}$ with all addresses configured — S90

↓

Measure $N_m$ in learning time period $T_{learn}$ — S91

↓

response message transmitted ? — S92

no →

yes ↓

estimate number of network nodes — S93

↓

calculate new response time — S94

↓

transmit at new response time — S95

↓

End — S96

Fig. 11

100

Processing
unit — 120

— 110

| T | R |

111    112

memory — 130

Fig. 12

200

Processing
unit — 220

— 210

| T | R |

211    212

memory — 230

Fig. 13

500

| 510 | Means for transmitting collect request message |
| 520 | Means for receiving response messages |
| 530 | Means for storing network addresses |

Fig. 14

600

| 610 | Means for receiving collect request message |
| 620 | Means for identifying subnetwork |
| 630 | Means for determining response time |
| 640 | Means for transmitting the response message |

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080008148 A1